# DEMANDE DE BREVET EUROPEEN

(11) **EP 1 519 554 A1**
(43) Date de publication de la demande: **30.03.2005**
(21) Numéro de dépôt: 04292180.9
(22) Date de dépôt: 10.09.2004
(51) Int. Cl.: H04M 3/56, H04Q 3/00

(54) **Procédé d'accès automatique à une conférence téléphonique et système pour sa mise en oeuvre**

(30) Priorité: 26.09.2003 FR 0311326
(71) Demandeur: FRANCE TELECOM, 75015 Paris (FR)
(72) Inventeur: Blin, Jean-Pierre, 92140 Clamart (FR); Koutsoumalis, Charalambos, 92130 Issy les Moulineaux (FR); Chivot-Gain, Anne-Francoise, 91370 Verrieres le Buisson (FR)
(74) Mandataire: Habasque, Etienne Joel Jean-François

(57) **Abrégé**

Ce procédé d'accès à un pont de conférence téléphonique, auquel correspond un numéro physique spécifique d'appel comprend l'appel par un client d'un numéro spécial correspondant à un service de conférence téléphonique, commun à un ensemble de conférences téléphoniques, le transfert de l'appel vers un point de commande de services, l'établissement d'une communication entre le client et un périphérique intelligent sous la commande du point de commande de services, l'envoi par le client au périphérique intelligent d'un code d'accès spécifique au pont de conférence téléphonique, la retransmission du code d'accès au pont de conférence par le périphérique intelligent vers le point de commande de services, la détermination du pont de conférence correspondant au code d'accès fourni et l'attribution à l'appel du numéro physique d'appel correspondant, par le point de commande de services et l'établissement d'une communication entre le client et le pont de conférence déterminé.

## Description

L'invention concerne les conférences téléphoniques ou les visioconférences multipoint et plus particulièrement le système d'accès à celles-ci.

On désigne par conférence téléphonique la possibilité pour plus de 2 personnes de se parler par téléphone, on parle alors d'audioconférence, ou de se parler et de se voir en utilisant des visiophones ou des salles de visioconférence, et on parle alors de visioconférence.

Lorsque le nombre de poste concerné est égal à 3, le terme de conférence à 3 est généralement utilisé.

Cette conférence à 3 est actuellement mise en oeuvre régulièrement par les entreprises en utilisant les facilités offertes par leurs autocommutateurs privés. Mais elle peut aussi être mise en oeuvre par un autocommutateur public et certains opérateurs de réseau fixe ou mobile permettent à leurs clients d'établir ce type de conférence.

Son utilisation en est généralement très simple avec les terminaux numériques puisqu'il suffit de mettre en garde son correspondant, d'appeler le deuxième correspondant, puis, lorsque celui-ci a décroché, d'appuyer sur le bouton « conférence » du terminal pour établir une conversation à 3 participants. Lorsque le terminal est analogique, les manoeuvres en sont à peine plus compliquées par l'utilisation des touches numériques au lieu de touches dédiées.

A partir d'une conférence à 3, il est souvent possible d'ajouter d'autres participants. Cependant, ce processus a deux inconvénients principaux : le nouveau participant doit être disponible au moment de l'appel et la qualité audio se dégrade très vite avec le nombre de participants car chaque participant entend la totalité des bruits provenant de chaque ligne.

En conséquence, un équipement appelé communément pont de conférence a été conçu pour remédier à ces inconvénients.

Le rôle de ce pont de conférence est de mélanger les différentes voies correspondant au nombre de participants tout en effectuant un certain nombre de traitements de signal permettant d'annuler les phénomènes d'écho et d'améliorer le rapport signal sur bruit pour permettre une écoute confortable. Cet équipement comporte aussi toutes les fonctions de transmission et de signalisation nécessaires pour se connecter au réseau.

A ce jour, l'utilisation des ponts de conférence, et donc des services de conférence associés, se fait de la façon suivante.

Les participants se fixent un jour et une heure de rendez-vous afin d'être tous disponibles au même moment pour se joindre à la conférence.

Un des participants réserve alors auprès d'un opérateur une ressource sur un pont de conférence. L'opérateur lui indique un numéro d'appel ainsi que, éventuellement, un code secret que les participants devront utiliser pour se joindre à cette conférence.

Alternativement, un des participants peut avoir un abonnement permanent à une ressource sur un pont de conférence, ce qui lui permet d'organiser une conférence à tout moment. Le numéro d'appel, et éventuellement le code d'accès, lui ont été donnés au moment de la souscription de son abonnement.

Ce qui vient d'être décrit s'applique aussi à la visioconférence pour laquelle des ponts de conférence spécifiques, et les services associés, ont été développés pour les réseaux fixes (RNIS, RTC) comme pour les réseaux mobiles ( recommandations H. 320, H. 324, H. 324M de l'UIT-T).

Un inconvénient de la technique décrite précédemment est le nombre de chiffres qu'un utilisateur doit composer pour accéder au service de conférence téléphonique. En effet, il doit commencer par composer un numéro d'accès respectant la numérotation nationale, par exemple 10 chiffres pour la France depuis 2000. Et si un code secret est utilisé afin d'éviter l'entrée de participants non autorisés, il doit encore composer entre 4 et 6 chiffres.

Pour restreindre le nombre de numéros à composer par le demandeur, certains opérateurs dissimulent un mot de passe dans le numéro attribué à la réservation. Cela oblige alors l'opérateur à réserver des plages importantes de numéros spécifiques par rapport au trafic envisagé. Typiquement, 100 000 numéros seront nécessaires pour un trafic potentiel de 1000 voies simultanées. En effet, un client qui essayerait de réutiliser le numéro attribué pour une heure donnée à un jour donné doit avoir une chance très faible de pouvoir entrer dans une conférence d'un autre client pendant les jours suivants.

Un deuxième inconvénient de la technique actuelle est la liaison entre un numéro donné et un pont de conférence. En conséquence, l'opérateur ne peut pas faire évoluer ce numéro pour, par exemple, lui donner un caractère mnémotechnique en liaison avec une campagne commerciale. Et, dans le cas où il possède plusieurs ponts de conférence, il ne peut équilibrer la charge de ceux-ci qu'au moment où il donne le numéro d'accès au client, c'est-à-dire bien avant le moment de l'utilisation : il ne peut pas alors réagir à un évènement imprévu comme une panne, ou à une utilisation intensive des utilisateurs abonnés, pour répartir différemment les conférences sur ses différents équipements.

Un autre inconvénient de la technique actuelle porte sur la gestion des codes d'accès. Ceux-ci sont attribués pour un numéro donné et sont donc liés à un pont de conférence donné. La modification des codes d'accès disponibles nécessite alors une intervention de l'opérateur sur chaque équipement.

Le but de l'invention est donc de supprimer les inconvénients précités en découplant le numéro d'appel et le code secret du pont de conférence.

Un autre but de l'invention est de permettre au client d'utiliser un code secret qu'il aura choisi parmi une liste de codes secrets disponibles, par exemple pour des raisons mnémotechniques.

L'invention a pour objet un procédé d'accès à un pont de conférence téléphonique, auquel correspond un numéro physique spécifique d'appel comprenant :
- l'appel par un client d'un numéro spécial correspondant à un service de conférence téléphonique, commun à un ensemble de conférences téléphoniques ;
- le transfert de l'appel vers un point de commande de services ;
- l'établissement d'une communication entre le client et un périphérique intelligent sous la commande du point de commande de services ;
- l'envoi par le client au périphérique intelligent d'un code d'accès spécifique au pont de conférence téléphonique ;
- la retransmission du code d'accès au pont de conférence par le périphérique intelligent vers le point de commande de services ;
- la détermination du pont de conférence correspondant au code d'accès fourni et l'attribution à l'appel du numéro physique d'appel correspondant, par le point de commande de services ;
- l'établissement d'une communication entre le client et le pont de conférence déterminé.

Un autre objet de l'invention est un système d'accès à un pont de conférence téléphonique pour la mise en oeuvre du procédé comprenant :
- un point de commande de services, apte à commander l'établissement d'une communication entre un périphérique intelligent et un client, sur réception d'un appel provenant d'un client à destination d'un numéro spécial correspondant à un service de conférence téléphonique ;
- le périphérique intelligent, apte à demander au client un code d'accès spécifique au pont de conférence et à retransmettre ledit code d'accès au point de commande de services et
- une pluralité de ponts de conférence associés au point de commande de services,

le point de commande de services étant en outre apte à déterminer le pont de conférence correspondant au code d'accès fourni, à attribuer à l'appel un numéro physique d'appel correspondant et à commander l'établissement d'une communication entre le client et le pont de conférence déterminé.

L'invention est aussi relative au logiciel installé sur l'équipement dédié qui permet la mise en oeuvre du procédé et du système décrits ci-dessus.

L'invention sera mieux comprise à la lecture de la description et à l'observation des dessins ci-après, dans lesquels,
- la figure 1 représente l'architecture d'un réseau intelligent, connue de l'art antérieur,
- la figure 2 représente l'architecture d'un réseau intelligent auquel sont connectés plusieurs ponts de conférence,
- la figure 3 représente l'organigramme de mise en oeuvre du procédé selon l'invention,
- la figure 4 représente un message selon la norme INAP "User-to-user signalling" et l'extraction de ses données en un message RNIS.

L'invention utilisant les concepts du réseau intelligent tels que décrits dans les recommandations de l'UIT-T citées ci-dessus, seuls seront décrits les éléments nécessaires à la compréhension de l'invention, en référence aux concepts et définitions inclus dans ces recommandations.

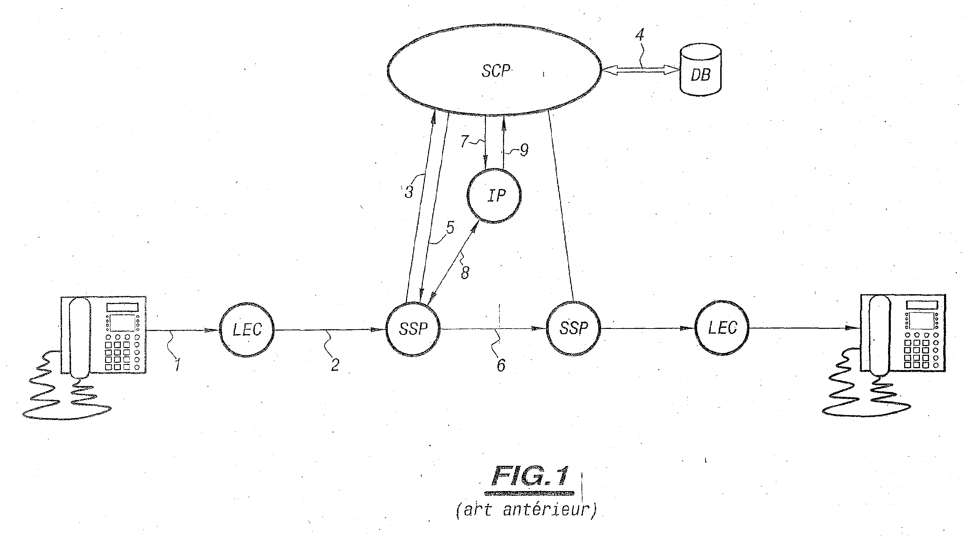

En se basant sur la figure 1, un service typique des réseaux intelligents, à savoir la gestion des numéros spéciaux, est décrit.

Un réseau intelligent se compose donc de commutateurs d'accès local (LEC, Local Echange) qui sont reliés directement aux terminaux des usagers. Si l'appel reçu n'est pas un appel local, celui-ci est dirigé vers les commutateurs de transit (SSP, Service Switching Point) qui établissent un chemin vers le LEC du correspondant appelé. Le LEC est alors chargé d'établir la connexion avec celui-ci.

Le service « numéro vert » qui permet en France à un demandeur de faire un appel gratuit, ou bien la gestion des numéros courts (à l'exception des numéros des services d'urgence (par exemple le 112, numéro d'urgence européen) qui sont gérés directement par les commutateurs d'accès local LEC), reposent sur la traduction d'un numéro logique 3BPQ ayant une structure déterminée (par exemple 0800 en France pour les numéros gratuits) en un numéro de destination réelle. Ces données de traduction font partie d'une table qui doit être commune à tous les commutateurs.

Quand le commutateur d'accès local reçoit en 1 du demandeur un appel utilisant un numéro logique 3BPQ, il le transfère en 2 au commutateur de transit SSP, le numéro logique 3BPQ n'étant pas un numéro local.

Lorsque le numéro composé est détecté comme un numéro 3BPQ par le SSP, celui-ci arrête tout traitement relatif à cet appel, et, tout en réservant la voie de communication entre le demandeur et lui-même, demande en 3 des instructions à un point de commande de service (SCP, Service Control Point). Le SCP est un point unique qui gère la table de traduction des numéros et auquel sont reliés tous les commutateurs. Le SCP recherche en 4 alors dans ses tables le numéro physique vers lequel rediriger l'appel en fonction du numéro logique sélectionné, et éventuellement de critères particuliers comme le jour de la semaine, l'heure du jour ou le lieu d'origine de l'appel. Une fois ce numéro trouvé, le SCP indique en 5 au SSP qu'il doit établir une connexion vers tel numéro physique. Le SSP établit alors en 6 de façon classique la communication.

Le SSP reçoit donc les ordres du SCP et les exécute.

Dans cette architecture, le SCP joue donc le rôle de maître alors que les SSPs sont les esclaves.

Un tel service est répertorié dans l'ensemble CS-1 de la recommandation Q. 1211 de l'IUT-T, dans le groupe « services de traduction de numéro ».

Dans certains types de services offerts par le réseau intelligent, il peut être nécessaire d'établir une interaction avec l'utilisateur. C'est le cas de services du type « centre d'appels » dans lequel l'utilisateur est dirigé vers tel ou tel opérateur en fonction du type de question à résoudre. Pour ce faire, le réseau intelligent dispose de périphériques intelligents (IP, Intelligent Peripheral) qui servent en 7 et 9, sous les ordres du SCP, à établir cette interaction. Très souvent ces IP sont des serveurs vocaux.

Le SCP envoie dans ce cas en 7 une commande spécifique au périphérique intelligent IP et demande en parallèle au SSP d'établir la communication entre le demandeur et le périphérique intelligent IP.

Le périphérique intelligent IP établit alors en 8 un dialogue avec le demandeur afin de recueillir les paramètres nécessaires.

Le dialogue achevé, le périphérique intelligent IP envoie en 9 ces paramètres au SCP pour qu'il puisse déterminer en 4 le numéro physique correspondant et rend la communication avec le demandeur au commutateur de transit SSP.

Le SCP envoie en 5 le numéro physique déterminé au SSP qui va ainsi pouvoir établir en 6 la communication demandée.

Selon un aspect remarquable du procédé objet de l'invention, le fournisseur de services de conférences téléphoniques sollicite auprès de l'organisme responsable du plan de numérotation national l'attribution d'un numéro court spécifique qui sera utilisé par toutes les personnes souhaitant accéder à une conférence téléphonique.

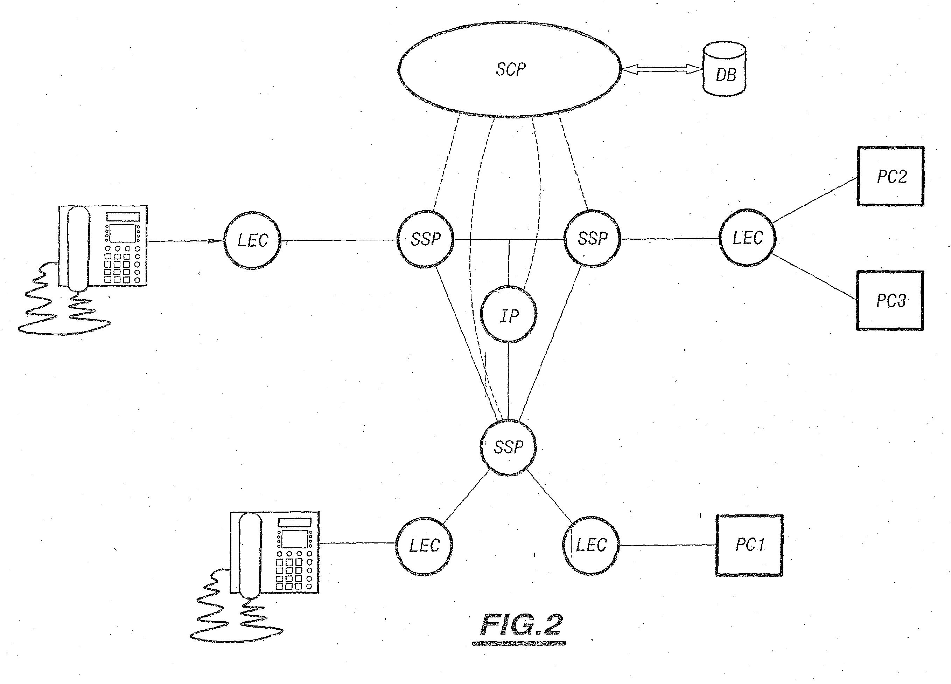

Comme représenté dans la figure 2, le fournisseur de services de conférences dispose, par ailleurs, d'un certain nombre de ponts de conférence PC1, PC2 et PC3 connectés au réseau intelligent et auxquels sont attribués des numéros physiques spécifiques.

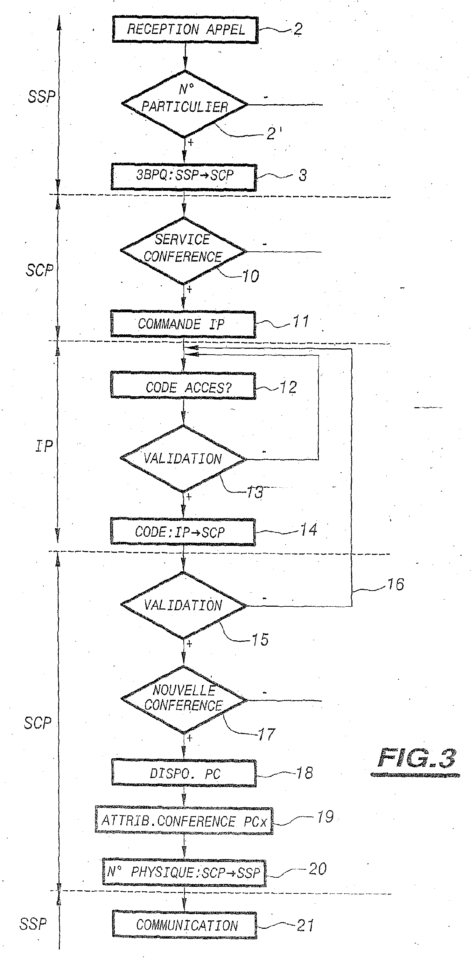

Le procédé objet de la présente invention consiste alors, figure 3, en utilisant les mécanismes du réseau intelligent tels que décrits ci-dessus, pour le SSP, à détecter 2' que le numéro composé est un numéro spécial, et à transférer 3 alors l'appel utilisant le numéro court de conférence téléphonique au service correspondant hébergé par le SCP. A la réception de l'appel, le SCP détermine 10 que le numéro correspond au service de conférences téléphoniques.

Puisqu'au numéro d'appel, qui est de type 3BPQ, correspond un ensemble de conférences téléphoniques, il est nécessaire que le SCP détermine la conférence demandée.

Pour ce faire, le SCP fait établir 11 une communication entre le demandeur et un périphérique intelligent IP. Par exemple, le SCP fournit au périphérique intelligent le numéro du demandeur.

Le périphérique intelligent IP requiert 12 auprès du demandeur, par exemple par dialogue vocal, le numéro d'accès à la conférence à laquelle il souhaite participer.

De manière remarquable, le périphérique intelligent IP peut effectuer une première validation 13 du code d'accès composé, par exemple sur le nombre de chiffres le composant, et établir un dialogue de correction avec le demandeur en cas d'erreur.

Après détection d'un code correct par le périphérique intelligent IP, celui-ci le transmet 14 au SCP. Le SCP peut alors effectuer une deuxième validation 15 pour déterminer si le code a bien été attribué. En cas d'erreur, le SCP envoie 16 une commande au périphérique intelligent IP pour poursuivre le dialogue et obtenir un code valide.

Quand le code d'accès est correct, la communication entre le demandeur et le périphérique intelligent est interrompue.

Durant l'étape suivante du procédé objet de l'invention, le SCP détermine 17 si cet appel correspond à une nouvelle conférence à ouvrir ou s'il correspond à une conférence existante, en cours.

Si la conférence existe déjà sur un pont de conférence, le SCP attribue à l'appel le numéro physique correspondant à ce pont de conférence et donne l'ordre 20 aux SSPs d'établir la communication correspondante 21, tel que décrit ci-dessus.

Si l'appel correspond à l'ouverture d'une nouvelle conférence, le SCP interroge 18 les ponts de conférence pour déterminer leurs disponibilités. En fonction de celles-ci, et d'autres paramètres fixés par l'opérateur, le SCP attribue 19 alors la conférence à un pont de conférence déterminé, donc à un numéro physique déterminé, et donne l'ordre 20 aux SSPs d'établir la communication correspondante 21. En parallèle, le SCP envoie une commande d'ouverture de conférence au pont de conférence choisie.

Dans une variante remarquable du procédé objet de l'invention, le pont de conférence renvoie au SCP, en réponse à la commande d'ouverture de conférence, le nombre de voies disponibles restantes. Le SCP, connaissant ainsi pour tous les ponts de conférence le nombre de voies disponibles, peut attribuer une nouvelle conférence à un pont de conférence sans avoir besoin de les interroger spécifiquement.

Les communications entre les différents éléments du réseau intelligent sont régies par la norme de signalisation « Intelligent Network Application Protocol » (INAP) dont les protocoles sont bien connus de l'homme du métier sans qu'il soit nécessaire de décrire leurs mises en oeuvre dans le détail.

Un aspect remarquable de l'invention porte sur l'utilisation du protocole INAP pour permettre au SCP de communiquer avec les ponts de conférence.

Il est en effet bien connu que le protocole INAP est limité à l'intérieur du réseau intelligent et que, par ailleurs, le réseau intelligent communique avec les éléments extérieurs comme les autocommutateurs d'abonnés (PABX) selon la signalisation d'abonné RNIS (norme Q. 931 de l'UIT-T).

Le procédé objet de la présente invention doit donc convertir les messages à la norme INAP en message à la norme RNIS pour permettre au SCP et aux ponts de conférence de communiquer.

De manière remarquable, le procédé objet de la présente invention utilise le codage « User-to User signalling » de la norme INAP pour faire communiquer le SCP avec les ponts de conférence.

Le code " User-to-User Signalling" permet de transférer des instructions/données entre le réseau intelligent et un périphérique externe comme un auto-commutateur privé ou un pont de conférence apte à interpréter la norme RNIS.

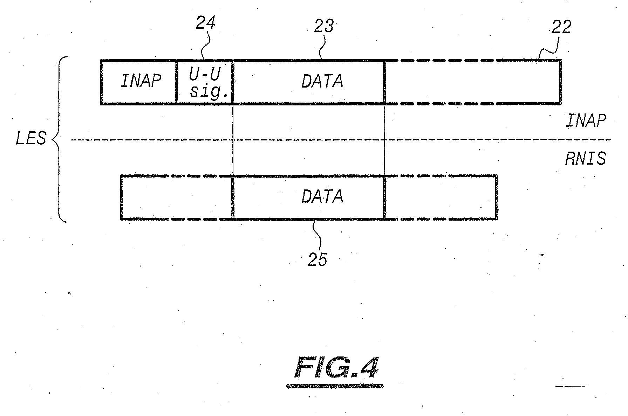

Les instructions données 23, figure 4, sont encapsulées dans un message INAP 22 comme des données du message. Celui-ci a un en-tête spécifique 24 indiquant qu'il est de type " User-to-User Signalling".

A réception, le LES, qui assure l'interfaçage avec cet équipement extérieur, récupère les données 23 du message INAP " User-to-User Signalling" et les transmet à l'équipement comme un message de signalisation RNIS 25.

Bien entendu, ce changement de protocole peut s'effectuer en sens inverse. Sur émission d'un message de l'équipement extérieur, le LES va l'encapsuler dans un message INAP " User-to-User Signalling" pour transfert à l'équipement adéquat.

Cette utilisation des signalisations INAP et RNIS ne saurait être limitée la généralité à l'invention, l'homme du métier pouvant transposer sans difficulté l'invention telle que décrite ci-après dans le cadre d'une autre signalisation, comme la signalisation CCITT n°7.

Il est remarquable de noter que, grâce au procédé objet de l'invention, le fournisseur peut choisir d'organiser l'ensemble de ses ponts de conférence selon une architecture répartie dans laquelle un pont de conférence est dédié à une zone donnée, avec un numéro physique donné ou une architecture centralisée dans laquelle tous les appels des participants sont transmis à un serveur central qui est chargé de l'accueil des participants d'une part et de répartir le trafic vers les différents ponts de conférence d'autre part, ou une architecture mixte avec un ensemble d'îlots comprenant plusieurs ponts de conférence. L'invention permet de choisir l'architecture et de la modifier au mieux des intérêts de l'opérateur sans que les clients ne perçoivent de différence, celle-ci étant cachée par le service correspondant du SCP dont seul le paramétrage évolue pour s'adapter à l'évolution de l'architecture des ponts de conférence.

Un autre aspect remarquable de l'invention est la centralisation des codes d'accès aux conférences téléphoniques sur la base de données du SCP.

Dans le procédé objet de l'invention, le code d'accès est le moyen unique pour singulariser une conférence téléphonique donnée puisque toutes les conférences sont appelées par les utilisateurs en utilisant le même numéro d'appel. Le PCS assure donc la gestion de ces codes d'accès et la correspondance entre ceux-ci et les conférences téléphoniques.

Cela permet une gestion extrêmement souple de ceux-ci. Cette centralisation des codes d'accès autorise en effet l'opérateur à définir des services innovants d'attribution de ces codes comme par exemple le choix par le client d'un code parmi une liste de codes disponibles.

De manière remarquable, le code d'accès peut ainsi être identique au numéro de téléphone physique de l'organisateur.

De manière remarquable, le procédé objet de la présente invention permet d'utiliser le périphérique intelligent IP pour définir un code mnémotechnique. En effet, en composant le numéro du service de conférences téléphoniques, le demandeur se trouve en dialogue avec un périphérique intelligent IP comme expliqué ci-dessus. Celui-ci peut alors, par exemple, proposer un choix entre l'accès à une conférence et la réservation d'un numéro d'accès. Si le demandeur choisit l'accès à une conférence, le périphérique intelligent lui demande son code d'accès et le procédé se déroule comme décrit ci-dessus.

Si le demandeur choisit la réservation de numéro, le périphérique intelligent IP établit un dialogue avec le demandeur pour que celui-ci choisisse un numéro valide. Dans une mise en oeuvre particulière de l'invention, le SCP a fourni préalablement au périphérique intelligent IP une liste de numéros valides et disponibles.

## Revendications

1. Procédé d'accès à un pont de conférence téléphonique, auquel correspond un numéro physique spécifique d'appel comprenant :
- l'appel (2) par un client d'un numéro spécial correspondant à un service de conférence téléphonique, commun à un ensemble de conférences téléphoniques ;
- le transfert (3) de l'appel vers un point de commande de services ;
- l'établissement (11) d'une communication entre le client et un périphérique intelligent sous la commande du point de commande de services ;
- l'envoi (12) par le client au périphérique intelligent d'un code d'accès spécifique au pont de conférence téléphonique ;
- la retransmission (14) du code d'accès au pont de conférence par le périphérique intelligent vers le point de commande de services ;
- la détermination (19) du pont de conférence correspondant au code d'accès fourni et l'attribution (20) à l'appel du numéro physique d'appel correspondant, par le point de commande de services ;
- l'établissement (21) d'une communication entre le client et le pont de conférence déterminé.

2. Procédé selon la revendication 1, dans lequel, si l'appel du client correspond à une nouvelle conférence à ouvrir, le point de commande de services attribue la conférence à un pont de conférence disponible, après avoir déterminé les disponibilités d'une pluralité de ponts de conférence.

3. Procédé selon l'une des revendications 1 et 2 dans lequel il est prévu une étape de validation de code d'accès à la conférence par le point de commande de services et, dans le cas où le code est valide, la communication entre le client et le périphérique intelligent est interrompue.

4. Procédé selon la revendication 3, dans lequel, dans le cas où le code d'accès n'est pas valide, le point de commande de services envoie une commande au périphérique intelligent pour poursuivre la communication et obtenir un code d'accès valide.

5. Procédé selon l'une des revendications 1 à 4, dans lequel il est prévu une étape préalable de réservation du code d'accès à la conférence par un organisateur de la conférence, dans laquelle, après composition du numéro spécial correspondant au service de conférence téléphonique par l'organisateur, un dialogue s'établit entre le demandeur et le périphérique intelligent et, au cours de ce dialogue, l'organisateur choisit le code d'accès.

6. Procédé selon la revendication 5, dans lequel le code d'accès est un code choisi dans une liste de codes d'accès disponibles ou le numéro d'appel usuel de l'organisateur.

7. Système d'accès à un pont de conférence téléphonique, pour la mise en oeuvre du procédé de la revendication 1, comprenant :
- un point de commande de services (SCP), apte à commander l'établissement d'une communication entre un périphérique intelligent (IP) et un client, sur réception d'un appel provenant d'un client à destination d'un numéro spécial correspondant à un service de conférence téléphonique ;
- le périphérique intelligent (IP), apte à demander au client un code d'accès spécifique au pont de conférence et à retransmettre ledit code d'accès au point de commande de services et
- une pluralité de ponts de conférence (PC1, PC2, PC3) associés au point de commande de services (SCP),
le point de commande de services (SCP) étant en outre apte à déterminer le pont de conférence correspondant au code d'accès fourni, à attribuer à l'appel un numéro physique d'appel correspondant et à commander l'établissement d'une communication entre le client et le pont de conférence déterminé.

8. Système selon la revendication 7, dans lequel le point de commande de services est apte à déterminer les disponibilités des ponts de conférence et, si l'appel du client correspond à une nouvelle conférence à ouvrir, à attribuer la conférence à un pont de conférence disponible.

9. Système selon l'une des revendications 7 et 8, dans lequel le périphérique intelligent est un serveur vocal.

10. Produit logiciel enregistré sur un support de mémorisation pour la mise en oeuvre par un ordinateur faisant office d'équipement dédié du procédé selon l'une des revendications 1 à 6 et du système d'accès à une conférence téléphonique selon l'une des revendications 7 à 9.
